# EUROPÄISCHE PATENTANMELDUNG

(11) **EP 2 662 320 A1**
(43) Veröffentlichungstag der Anmeldung: **13.11.2013**
(21) Anmeldenummer: 13166869.1
(22) Anmeldetag: 07.05.2013
(51) Int. Cl.: B65G 47/91, B65G 47/92

(54) **Greifprozess und Greifvorrichtung**

(30) Priorität: 07.05.2012 DE 102012207496
(71) Anmelder: J. Schmalz GmbH, 72293 Glatten (DE)
(72) Erfinder: Kuolt, Harald Dr., 78586 Deilingen (DE)
(74) Vertreter: Dreiss

(57) **Zusammenfassung**

Die Erfindung betrifft eine Greifvorrichtung und einen Greifprozess besteht aus mehreren Teilschritten:
- Aufnehmen des Werkstücks durch den Greifer;
- Haften des Werkstücks am Greifer (und transportieren des Werkstücks von A nach B; und
- Trennen des Werkstücks vom Greifer.

## Beschreibung

Ein Greifprozess besteht aus mehreren Teilschritten:
- Aufnehmen des Werkstücks durch den Greifer
- Haften des Werkstücks am Greifer (und transportieren des Werkstücks von A nach B)
- Trennen des Werkstücks vom Greifer

Im Regelfall (z.B. bei Vakuumgreifern), wird der Haftmechanismus gleichzeitig zum Verbinden des Greifers mit dem Werkstück verwendet. Wird das Haften "deaktiviert", dann wird das Werkstück aufgrund seines Eigengewichts vom Greifer getrennt.

Zusätzliche Aufgaben, die möglich sein sollten, sind z.B. das Werkstück beim Aufnehmen am Greifer zu vereinzeln. Denkbar ist auch, dass das Trennen von Werkstück und Greifer mit einem Druckluftimpuls beschleunigt wird, um das Werkstück positionsgenau (und schneller) abzulegen.

Für alle oben genannten Teilfunktionen lassen sich verschiedene physikalische Funktionsprinzipien ableiten, die sich durch einen morphologischen Kasten jeweils kombinieren lassen (siehe Zeichnung). So entsteht eine Vielzahl unterschiedlicher neuer Greifprinzipien.

### Teilfunktion "Aufnehmen des Werkstücks durch den Greifer"

- Ohne Unterstützung
- Durch Vakuum (welches per Druckluft, elektrisch oder durch andere physikalische Effekte erzeugt werden kann)
- Durch Anpressen des Werkstücks an den Greifer oder durch Anpressen des Greifers auf das Werkstück
- Durch Übergabe von einer anderen Einheit (z.B. Förderband, Stempel, etc.), auch mechanisch
- Durch Vortex oder ein anderes Strömungsprinzip
- Weiter kann das Werkstück durch die o.g. Übergabeeinheit an den Greifer bewegt werden, ohne dass sich diese Einheit bewegt. Z.B. Durch einen Druckluftstoß bzw. einen "Fluidstrom" der Übergabeeinheit, durch Magnetismus, durch ein elektrisches Feld, durch Ultraschall, etc.
- Magnetismus
- Weitere Effekte aus den unten genannten Teilfunktionen "Halten" und "Trennen"

### Teilfunktion "Halten des Werkstücks"

- Vakuum
- Erzeugung einer stoffschlüssigen / reibschlüssigen oder formschlüssigen Verbindung zwischen Greifer und Werkstück
- Gekko-/ oder Nanoeffekt unter Verwendung von van der Waals-Kräfte
- Nadeln
- Adhäsion, z.B. Klebeband, Kleber, etc.
- Magnetkraft
- Elektrostatik / Elektroadhäsion, durch ein elektrisches Feld
- Klemmen / Festhalten - mechanisches Klemmung
- Verschieben von "Nanoflächen" gegeneinander, die auf jeweils beweglichen Komponenten gegenläufig verschoben werden. So entsteht au seiner Reibkraft, die durch jeweils eine dieser Nanoflächen entsteht, eine Haftkraft. Dies kann ggf. auch mit anderen Reibflächen realisiert werden. Mit der Bezeichnung "Nanoflächen" sind Oberflächen gemeint, die mit einer "Gekko-" oder Nanostruktur versehen sind, um z.B. Van-der-Waals-Kräfte zu erzeugen.
- Chemische / Thermische Haftung
- Adhäsion mit Flüssigkeit (z.B. Haftprinzip von Fliegen), Kapillareffekt, etc.
- Prinzip des Gefriergreifens
- Mikroverzahnung (z.B. Klettverschluss, Kletterpflanzen, etc.)
- Ultraschall
- Vortex
- Andere Hafteffekte, die durch Felder entstehen bzw. auf Anziehungskräften zwischen Atomen, Molekülen, etc. basieren

### Teilfunktion "Trennen des Werkstücks vom Greifer"

- Ohne Unterstützung
- Druckluft (z.B. deionisierte Luft bei Elektrostatikgreifer)
- Anderes Medium, das unter Druck steht (andere Gase, Flüssigkeiten, etc.)
- Ultraschall
- Belüftung gegen Atmosphäre
- Runterdrücken bzw. losreißen des Werkstücks vom Greifer (z.B. über einen Stempel, etc.)
- Wegbiegen des Greifers (zur Verringerung der Haftfläche)
- Absteifen des Werkstücks an einer Bürste oder einer Kante
- Lösung der Haftung durch Wärme oder andere Effekte

Die aufgeführten Prinzipien bzw. die Kombinationen daraus lassen sich sowohl für das Halten und Transportieren von Werkstücken als auch für das Spannen von Werkstücken verwenden.

Darüber hinaus lassen sich sowohl die o.g. "Halte-" als auch die "Trennprinzipien" so kombinieren, dass berührungsfreies Greifen möglich wird (z.B. Vakuum zum Ansaugen, Ultraschall zum Abstoßen als sog. "Ultraschallgreifer").

Die o.g. Funktionsprinzipien lassen sich sowohl als Einzelkomponenten als auch durch Aneinanderreihung als Flächensysteme oder als Förderbänder, etc. ausführen. Einige Kombinationen sind bereits bekannt. So z.B. die übliche Vakuumtechnik, bei der Vakuum die Aufnahme des Werkstücks am Greifer sowie die Haltefunktion übernimmt und ggf. ohne weitere Trennfunktion (also durch das Eigengewicht des Werkstücks), durch Belüftung gegen Atmosphäre oder durch "Abblasen" wieder vom Werkstück getrennt werden kann.

Des weiteren sind z.B. Gekkogreifer, Elektrostatikgreifer, Nadelgreifer, Magnetgreifer, Klemmgreifer, Gefriergreifer oder Ultraschallgreifer bekannt.

Magnetismus wird hier für alle Arten von Magnetismus verwendet, also für Elektromagnetismus, Permanentmagnete, etc.

Neu sind Kombinationen, wie z.B. Gekkogreifer mit Vakuum-und Abblasfunktion, Elektrostatik- oder Elektroadhäsionsgreifer mit Abblas- oder einer anderen Trennfunktion, etc.

Die einzelnen Kombinationen lassen sich aus dem anhängenden Morphologischen Kasten (Zeichnung) entnehmen.

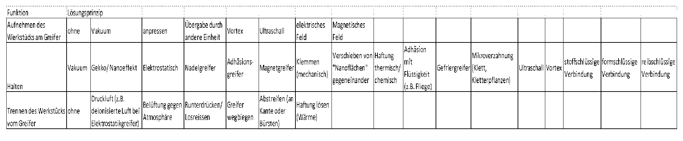

## Patentansprüche

1. Greifprozess besteht aus mehreren Teilschritten:
- Aufnehmen des Werkstücks durch den Greifer;
- Haften des Werkstücks am Greifer (und transportieren des Werkstücks von A nach B; und
- Trennen des Werkstücks vom Greifer.

2. Greifprozess nach Anspruch 1, **dadurch gekennzeichnet, dass** das Aufnehmen des Werkstücks
- ohne Unterstützung;
- durch Vakuum (welches per Druckluft, elektrisch oder durch andere physikalische Effekte erzeugt werden kann);
- durch Anpressen des Werkstücks an den Greifer oder durch Anpressen des Greifers auf das Werkstück;
- durch Übergabe von einer anderen Einheit (z.B. Förderband, Stempel, etc.), auch mechanisch;
- durch Vortex oder ein anderes Strömungsprinzip;
- durch Heranführen des Werkstücks durch die o.g. Übergabeeinheit an den Greifer, ohne dass sich diese Einheit bewegt wird, z.B. durch einen Druckluftstoß bzw. einen "Fluidstrom" der Übergabeeinheit, durch Magnetismus, durch ein elektrisches Feld, durch Ultraschall, etc.; und/oder
- Magnetismus
erfolgt.

3. Greifprozess nach einem der vorhergehenden Ansprüche, **dadurch gekennzeichnet, dass** das Haften des Werkstücks am Greifer durch
- Vakuum;
- Erzeugung einer stoffschlüssigen / reibschlüssigen oder formschlüssigen Verbindung zwischen Greifer und Werkstück;
- Gekko-/ oder Nanoeffekte unter Verwendung von van der Waals-Kräfte;
- die Verwendung von Nadeln;
- Adhäsion, z.B. Klebeband, Kleber, etc.;
- Magnetkraft;
- Elektrostatik / Elektroadhäsion, durch ein elektrisches Feld;
- Klemmen / Festhalten - mechanisches Klemmung;
- Verschieben von "Nanoflächen" gegeneinander, die auf jeweils beweglichen Komponenten gegenläufig verschoben werden, wodurch zusätzlich zur Reibkraft, die durch jeweils eine dieser Nanoflächen entsteht, eine Haftkraft entsteht, was ggf. auch mit anderen Reibflächen realisiert werden kann;
- chemische / thermische Haftung;
- Adhäsion mit Flüssigkeit (z.B. Haftprinzip von Fliegen), Kapillareffekt, etc.;
- das Prinzip des Gefriergreifens;
- Mikroverzahnung (z.B. Klettverschluss, Kletterpflanzen, etc.);
- Ultraschall;
- Vortex; und/oder
- andere Hafteffekte, die durch Felder entstehen bzw. auf Anziehungskräften zwischen Atomen, Molekülen, etc. basieren
erfolgt.

4. Greifprozess nach einem der vorhergehenden Ansprüche, **dadurch gekennzeichnet, dass** das Trennen des Werkstücks vom Greifer durch
- ohne Unterstützung;
- Druckluft (z.B. deionisierte Luft bei Elektrostatikgreifer);
- ein anderes Medium, das unter Druck steht (andere Gase, Flüssigkeiten, etc.);
- Ultraschall;
- Belüftung gegen Atmosphäre;
- Abdrücken bzw. Losreißen des Werkstücks vom Greifer (z.B. über einen Stempel, etc.);
- Wegbiegen des Greifers (zur Verringerung der Haftfläche);
- Absteifen des Werkstücks an einer Bürste oder einer Kante; und/oder
- Lösung der Haftung durch Wärme oder andere Effekte
erfolgt.

5. Greifvorrichtung zur Durchführung eines Greifprozesses nach einem der vorhergehenden Ansprüchen, mit einer ersten Einrichtung zum Aufnehmen des Werkstücks, einer zweiten Einrichtung zum Halten des Werkstücks und einer dritten Einrichtung zum Trennen des Werkstücks.

6. Greifvorrichtung nach Anspruch 5, **dadurch gekennzeichnet, dass** die ersten und zweite, oder zweite und dritte oder erste und dritte Einrichtung die gleiche Einrichtung ist.

7. Greifvorrichtung nach Anspruch 5, **dadurch gekennzeichnet, dass** die ersten, zweite und dritte Einrichtung die gleiche Einrichtung ist.

8. Greifvorrichtung nach einem der Ansprüche 5 bis 7, **dadurch gekennzeichnet, dass** die erste Einrichtung das Werkstück aufnimmt:
- mittels Vakuum (welches per Druckluft, elektrisch oder durch andere physikalische Effekte erzeugt werden kann);
- durch Anpressen des Werkstücks an den Greifer oder durch Anpressen des Greifers auf das Werkstück;
- durch Übergabe von einer anderen Einheit (z.B. Förderband, Stempel, etc.), auch mechanisch;
- durch Vortex oder ein anderes Strömungsprinzip;
- durch Heranführen des Werkstücks durch die o.g. Übergabeeinheit an den Greifer, ohne dass sich diese Einheit bewegt wird, z.B. durch einen Druckluftstoß bzw. einen "Fluidstrom" der Übergabeeinheit, durch Magnetismus, durch ein elektrisches Feld, durch Ultraschall, etc.; und/oder
- Magnetismus.

9. Greifvorrichtung nach einem der Ansprüche 5 bis 8, **dadurch gekennzeichnet, dass** die zweite Einrichtung das Werkstück hält durch
- Vakuum;
- Erzeugung einer stoffschlüssigen / reibschlüssigen oder formschlüssigen Verbindung zwischen Greifer und Werkstück;
- Gekko-/ oder Nanoeffekte unter Verwendung von van der Waals-Kräfte;
- die Verwendung von Nadeln;
- Adhäsion, z.B. Klebeband, Kleber, etc.;
- Magnetkraft;
- Elektrostatik / Elektroadhäsion, durch ein elektrisches Feld;
- Klemmen / Festhalten - mechanisches Klemmung;
- Verschieben von "Nanoflächen" gegeneinander, die auf jeweils beweglichen Komponenten gegenläufig verschoben werden, wodurch zusätzlich zur Reibkraft, die durch jeweils eine dieser Nanoflächen entsteht, eine Haftkraft entsteht, was ggf. auch mit anderen Reibflächen realisiert werden kann;
- chemische / thermische Haftung;
- Adhäsion mit Flüssigkeit (z.B. Haftprinzip von Fliegen), Kapillareffekt, etc.;
- das Prinzip des Gefriergreifens;
- Mikroverzahnung (z.B. Klettverschluss, Kletterpflanzen, etc.);
- Ultraschall;
- Vortex; und/oder
- andere Hafteffekte, die durch Felder entstehen bzw. auf Anziehungskräften zwischen Atomen, Molekülen, etc. basieren.

10. Greifvorrichtung nach einem der Ansprüche 5 bis 9, **dadurch gekennzeichnet, dass** die dritte Einrichtung das Werkstück trennt durch
- Druckluft (z.B. deionisierte Luft bei Elektrostatikgreifer);
- ein anderes Medium, das unter Druck steht (andere Gase, Flüssigkeiten, etc.);
- Ultraschall;
- Belüftung gegen Atmosphäre;
- Abdrücken bzw. Losreißen des Werkstücks vom Greifer (z.B. über einen Stempel, etc.);
- Wegbiegen des Greifers (zur Verringerung der Haftfläche);
- Absteifen des Werkstücks an einer Bürste oder einer Kante; und/oder
- Lösung der Haftung durch Wärme oder andere Effekte.
